# EUROPEAN PATENT SPECIFICATION

(11) **EP 1 949 274 B1**
(45) Date of publication and mention of the grant of the patent: **29.05.2019**
(21) Application number: 06846305.8
(22) Date of filing: 15.11.2006
(51) Int. Cl.: G06F 17/30

(54) **DISPLAYING COMPACT AND EXPANDED DATA ITEMS**
ANZEIGE KOMPAKTER UND ERWEITERTER DATENOBJEKTE
AFFICHAGE D'ÉLÉMENTS DE DONNÉES COMPACTS ET ÉTENDUS

(30) Priority: 15.11.2005 US 736300 P
(43) Date of publication of application: 30.07.2008
(73) Proprietor: Google LLC, Mountain View, CA 94043 (US)
(72) Inventor: OLDHAM, Jeffrey D., San Jose, California 95123-3727 (US); MITTLEMAN, Joshua D., Croton-on-hudson, New York 10520 (US); COOK, Alex, San Francisco, California 94110 (US)
(74) Representative: Williams, Michael David
(86) International application number: PCT/US2006/060906
(87) International publication number: WO 2007/059503

(56) References cited:
- WO-A1-02/19172
- US-A1- 2006 294 476
- DIEBERGER A ET AL: "Exploratory navigation in large multimedia documents using context lenses" SYSTEM SCIENCES, 2001. HICSS. PROCEEDINGS OF THE 35TH ANNUAL HAWAII INTERNATIONAL CONFERENCE ON 7-10 JANUARY 2001, PISCATAWAY, NJ, USA,IEEE, 7 January 2001 (2001-01-07), pages 1462-1468, XP010587417 ISBN: 0-7695-1435-9

## Description

### BACKGROUND

### Field of the Invention

Implementations described herein relate generally to displaying data and, more particularly, to displaying compact and expanded versions of data items.

### Description of Related Art

Many web pages (e.g., Google web search page) display summary lists of information containing short descriptions and pointers to underlying information. For example the ads displayed on the right side of a Google search page include a vertical list of individual ads, each ad containing a title, a short text creative, and a Uniform Resource Locator (URL) as well as a link to the ad's landing page. Search results are similarly displayed in a vertical list of items, each containing a title, a snippet, a URL, and some other information. Each item links to a web page. In e-mail applications (e.g., Google GMail), e-mails may be displayed one per line listing the sender, the subject line, and a time. Each line is a pointer to the underlying e-mail.

When deciding what to display in a summary list, there is a tension between the amount of space to display each item's information and the extent of the item's summary. Larger summaries are frequently more useful to users but require more display space and, thus, fewer items can be shown. Recent ad evaluations, for example, have shown that users perceive ads as having higher quality if longer creatives are displayed, but longer creatives increase the size of the ads, thus, possibly reducing the total number of ads that can be displayed, or cluttering the results page.

In DIEBERGER ET AL: "Exploratory navigation in large multimedia documents using context lenses", SYSTEM SCIENCES, 2001. HICCS. PROCEEDINGS OF THE 35TH ANNUAL HAWAII INTERNATIONAL CONFERENCE ON 7-10 JANUARY 2001, PISCATAWAY, NJ, USA, IEEE, 7 January 2001, pages 1462-1468, a context lens called navigation tool for data is disclosed. The context lens is a focus and context visualization and navigation tool particularly suited for navigating large documents, or connections of documents. Context lenses have been applied to navigating web pages, video collections and slide presentations. The experiences both with linear as well as with hierarchical context lenses is discussed. It is focused on the use of information scent in the hierarchical context lens, and on supporting an exploratory navigation style in documents. Exploratory navigation is supported by the fact that a context lens delays commitment in the user interface through an interaction style called brushing. Brushing lowers the cost of exploring the section of the document and therefore does not only support, but actively encourage an exploratory navigation style. This aspect of context lenses is especially valuable for navigation of large amounts of media data on low bandwidth devices, such as wireless PDAs.

### SUMMARY

According to an aspect of the present invention, there is provided a method and a device as defined by the independent claims.

According to a further aspect, a method may include searching a corpus of documents based on a search query to identify first and second documents that match the search query. The method may further include extracting a first snippet of content from the first document, extracting a second snippet of content from the second document and generating a search result document that includes the first and second snippets. The method may also include designating a first portion of the first snippet that can be displayed in a user interface that will visually render the search result document and designating a second portion of the first snippet that should not have any visual indication or reference in the user interface that will visually render the search result document unless the first snippet is selected by a user via the user interface.

According to an additional aspect, a method may include sending a search query to a search engine and receiving from the search engine, responsive to the search query, a document comprising a first search result less than an entirety of the first search result item and comprises the second search result item, where the portion is visually rendered in a region of the document, and receiving a selection of the first search result item from a user. The method may also included visually expanding the region of the document to a size sufficient to render an entirety of the first search result item based on the selection and visually rendering the entirety of the first search result item within the expanded region of the document.

According to a further aspect, a method may include visually displaying data within a data item in a document, where the data item includes elided data not visually displayed in the document. The method may also include receiving a selection of the data item from a user and removing the visually displayed data within the data item and placing an animation object within the data item based on the selection of the data item. The method may further include animating the animation object such that it expands to fill a space in the document sufficient to visually display the data and the elided data and removing the animation object and visually displaying the data and the elided data within the expanded space in the document.

According to an additional aspect, a method may include visually displaying first data within a first data item in a document, where the first data item includes elided data not visually displayed in the document and receiving a selection of the first data item from a user. The method may further include enlarging the first data item in two dimensions in the document in two dimensions based on the selection of the first data item and visually displaying the first data and the elided data within the enlarged first data item.

According to a further aspect, a method may include visually displaying first data within a first data item in a document, where the first data item includes elided data not visually displayed in the document and where the first data item includes active handles at one or more corners of the first data item. The method may further include receiving input from a user dragging open one of the active handles such that the first data item is expanded to a size sufficient to visually display the first data and the elided data and visually displaying the first data and the elided data within the expanded first data item.

According to another aspect, a method may include visually displaying a list of data items in a document, where the list of data items includes a first data item and where the first data item includes elided data not visually displayed in the document. The method may further include receiving a selection of the first data item from a user and appending the elided data to the first data such that the elided data is visually displayed in a dimension perpendicular to a dimension in which the list of data items primarily extends.

According to a further aspect, a method may include visually displaying first data of a first data item in a document, where the first data item includes elided data not visually displayed in the document. The method may further include receiving a selection of the first data item from a user and replacing the first data with the elided data to visually display the elided data in the document.

According to an additional aspect, a method may include visually displaying first data within a data item in a document, where the data item includes first and second elided data not visually displayed in the document, and receiving a first selection of the data item from a user. The method may further include visually expanding the data item within the document to display the first data and the first elided data, receiving a second selection of the data item from the user, and visually expanding the data item within the document to display the first data, the first elided data and the second elided data.

According to another aspect, a method includes visually displaying a list of data items in a document, where the list of data items comprises first and second data items and where the first data item includes elided data not visually displayed in the document. The method further includes receiving a selection of the first data item from a user and visually expanding the first data item within the document to display the elided data, where visually expanding the first data item displaces the second data item a distance downwards in the document.

According to an additional aspect, a method includes visually displaying first data of a data item in a document, where the data item includes multiple different segments of elided data not visually displayed in the document. The method further includes receiving a selection of the data item from a user and visually expanding the data item in the document to simultaneously include the multiple segments of elided data at different locations in the document.

According to a further aspect, a method includes visually displaying a list of data items in a document, where the list of data items comprises first and second data items and where the first data item includes elided data not visually displayed in the document. The method further includes receiving a selection of the first data item from a user and visually expanding the first data item within the document to display the elided data, where expanding the first data item causes the first data item to visually overlap at least a portion of the second data item.

### BRIEF DESCRIPTION OF THE DRAWINGS

The accompanying drawings, which are incorporated in and constitute a part of this specification, illustrate one or more embodiments of the invention and, together with the description, explain the invention. In the drawings,
FIG. 1 is an exemplary diagram of an overview of an implementation of the invention;
FIG. 2 is an exemplary diagram of a network in which systems and methods consistent with principles of the invention may be implemented;
FIG. 3 is an exemplary diagram of a client or server of FIG. 2 according to an implementation consistent with principles of the invention;
FIG. 4 is an exemplary diagram of the expansion of a selected data item to display previously elided data consistent with principles of the invention;
FIGS. 5 and 6 are exemplary diagrams of the expansion of a selected data item within a list of data items to display previously elided data consistent with principles of the invention;
FIG. 7 is an exemplary diagram of expansion of a selected data item within a list of data items that includes data arranged hierarchically consistent with principles of the invention;
FIGS. 8A and 8B is a flowchart of an exemplary process for constructing a document that includes elided data consistent with principles of the invention;
FIGS. 9A and 9B is a flowchart of an exemplary process for expanding displayed data to display elided data that was previously visually omitted from the display consistent with principles of the invention; and
FIGS. 10A and 10B illustrate one example of the selection of a data item in a document to display previously elided data.

### DETAILED DESCRIPTION

The following detailed description of the invention refers to the accompanying drawings. The same reference numbers in different drawings may identify the same or similar elements. Also, the following detailed description does not limit the invention.

Consistent with aspects of the invention, the tradeoff between displaying information and the space being required by this information within a list of items may be alleviated by eliding data from a data display item, but later providing this elided data to a user upon user selection. For example, a user moving a "mouse" over a data item in a list of data items may result in the display of a longer "snippet" of data that includes the elided data. Thus, a user may use a "mouse" to browse through a list of data items to elicit the display of elided data only with respect to those data items in which the user is interested.

A "document," as the term is used herein, is to be broadly interpreted to include any machine-readable and machine-storable work product. A document may include, for example, an e-mail, a website, a business listing, a file, a combination of files, one or more files with embedded links to other files, a news group posting, a blog, a web advertisement, a digital map, etc. In the context of the Internet, a common document is a web page. Documents often include textual information and may include embedded information (such as meta information, images, hyperlinks, etc.) and/or embedded instructions (such as Javascript, etc.). A "link," as the term is used herein, is to be broadly interpreted to include any reference to/from a document from/to another document or another part of the same document

### OVERVIEW

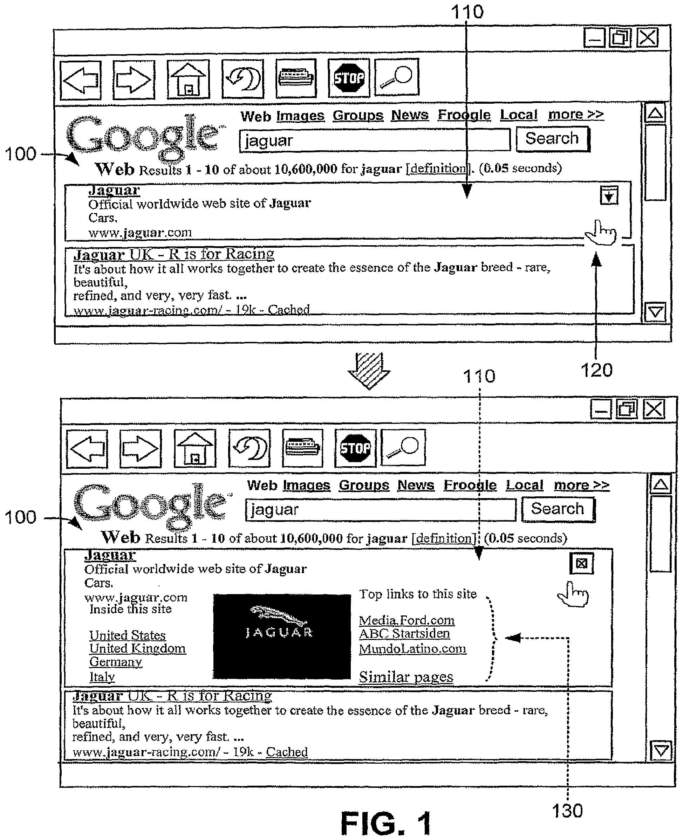

FIG. 1 illustrates an exemplary overview of an implementation of the invention that expands data items to display data content that was previously visually omitted from a document. FIG. 1 depicts a search results document 100 for which a user has conducted a search using a provided search query (e.g., "jaguar"). Based on the provided search query, a search engine has sent the search results document 100 to the user. The search results document includes a list of search result items related to the search query, including data item 110. Data item 110 has a limited amount of data actually displayed, with other elided portions of data being possibly contained in document 100, but not visually displayed (e.g., no visual reference when first visually rendered by a user interface). The user may select data item 110, via "clicking" on data item 110, or via a "mouse-over" event 120 where the user positions a cursor over data item 110 using a "mouse." In response to selection of data item 110, elided data 130, that was previously visually omitted from document 100, may be visually inserted into the location of data item 110 on document 100. The elided data 130 may include any type of data related to data item 110, including, for example, one or more additional "snippets" from the target document which data item 110 describes, sitelinks, an image from the target document which data item 110 describes, one or more other documents that link to the target document which data item 110 describes, maps for addresses that appear on the target document, information about any businesses or entities described on the target document, other similar documents to the target document, a link to a home document of an author of the target document, a longer advertisement or other document created by hand to supplement the initially displayed data, etc. A snippet may include a segment of a document that typically consists of a set of contiguous text about the size of a paragraph and may be about a single topic. A snippet may also include graphs, pictures, or diagrams.

The elided data 130 may be extracted and associated with the target document in a repository created by a crawling engine that "crawls" content, copies the content in a repository, and then indexes the content. At query time, selected portions of elided data 130 may be chosen to be included as hidden data in the search results document. Additionally, at query time, data, among lists of data associated with the target document, may be selected for inclusion in the elided data 130 hidden in the search results document. Alternatively, at interaction time, when a user chooses to select a particular search result item, a request can be sent from the client to the server that executed the search (or to a different server that did not execute the search) to request elided data that may be visually displayed.

### EXEMPLARY NETWORK CONFIGURATION

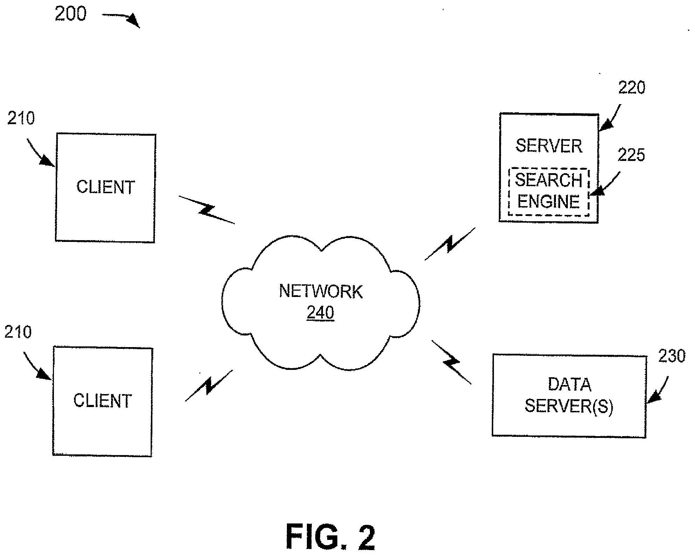

FIG. 2 is an exemplary diagram of a network 200 in which systems and methods consistent with the principles of the invention may be implemented. Network 200 may include multiple clients 210 connected to one or more servers 220-230 via a network 240. Two clients 210 and two servers 220-230 have been illustrated as connected to network 240 for simplicity. In practice, there may be more or fewer clients and servers. Also, in some instances, a client may perform one or more functions of a server and a server may perform one or more functions of a client.

Clients 210 may include client entities. An entity may be defined as a device, such as a personal computer, a wireless telephone, a personal digital assistant (PDA), a laptop, or another type of computation or communication device, a thread or process running on one of these devices, and/or an object executable by one of these devices. Servers 220 and 230 may include server entities that access, fetch, aggregate, process, search, and/or maintain documents in a manner consistent with the principles of the invention. Clients 210 and servers 220 and 230 may connect to network 240 via wired, wireless, and/or optical connections.

In an implementation consistent with the principles of the invention, server 220 may include a search engine 225 usable by users at clients 210. Server 220 may implement a data aggregation service by crawling a corpus of documents (e.g., web pages) hosted on data server(s) 230, indexing the documents, and storing information associated with these documents in a repository of crawled documents. The aggregation service may be implemented in other ways, such as by agreement with the operator(s) of data server(s) 230 to distribute their documents via the data aggregation service. Search engine 225 may execute a search using a query, received from a user at a client 210, on the corpus of documents stored in the repository of crawled documents. Server 220 may provide, to a user issuing a query, one or more search result documents that include a ranked list of documents related to the received search query. The ranked list of documents may further include a list of advertisements related to the received search query. The one or more search result documents may include elided data that may not be initially visually displayed in the search result documents when they are rendered by a user interface.

Data server(s) 230 may store or maintain documents that may be crawled by server 220. Such documents may include data related to published news stories, products, images, user groups, geographic areas, or any other type of data. For example, server(s) 230 may store or maintain news stories from any type of news source, such as, for example, the Washington Post, the New York Times, Time Magazine, or Newsweek. As another example, server(s) 230 may store or maintain data related to specific products, such as product data provided by one or more product manufacturers. As yet another example, server(s) 230 may store or maintain data related to other types of web documents, such as pages of web sites.

While servers 220-230 are shown as separate entities, it may be possible for one of servers 220-230 to perform one or more of the functions of the other one of servers 220-230. For example, it may be possible that servers 220 and 230 are implemented as a single server. It may also be possible for a single one of servers 220 and 230 to be implemented as two or more separate (and possibly distributed) devices.

Network 240 may include one or more networks of any type, including a local area network (LAN), a wide area network (WAN), a metropolitan area network (MAN), a telephone network, such as the Public Switched Telephone Network (PSTN) or a Public Land Mobile Network (PLMN), an intranet, the Internet, a memory device, or a combination of networks. The PLMN(s) may further include a packet-switched sub-network, such as, for example, General Packet Radio Service (GPRS), Cellular Digital Packet Data (CDPD), or Mobile IP sub-network.

### EXEMPLARY CLIENT/SERVER ARCHITECTURE

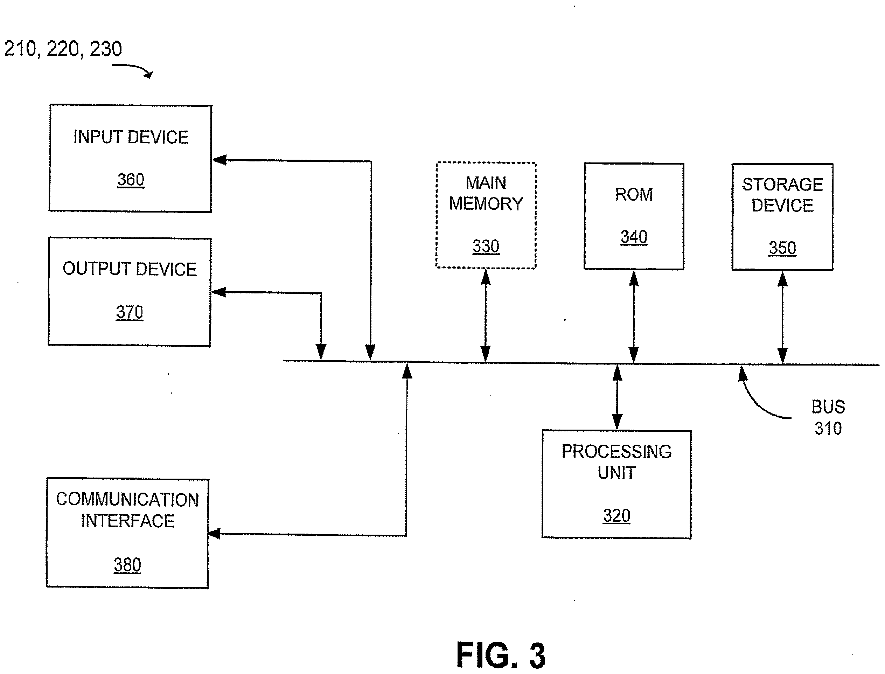

FIG. 3 is an exemplary diagram of a client or server entity (hereinafter called "client/server entity"), which may correspond to one or more of clients 210 and/or servers 220-230, according to an implementation consistent with the principles of the invention. The client/server entity may include a bus 310, a processor 320, a main memory 330, a read only memory (ROM) 340, a storage device 350, an input device 360, an output device 370, and a communication interface 380. Bus 310 may include a path that permits communication among the elements of the client/server entity.

Processor 320 may include a processor, microprocessor, or processing logic that may interpret and execute instructions. Main memory 330 may include a random access memory (RAM) or another type of dynamic storage device that may store information and instructions for execution by processor 320. ROM 340 may include a ROM device or another type of static storage device that may store static information and instructions for use by processor 320. Storage device 350 may include a magnetic and/or optical recording medium and its corresponding drive.

Input device 360 may include a mechanism that permits an operator to input information to the client/server entity, such as a keyboard, a mouse, a pen, voice recognition and/or biometric mechanisms, etc. Output device 370 may include a mechanism that outputs information to the operator, including a display, a printer, a speaker, etc. Communication interface 380 may include any transceiver-like mechanism that enables the client/server entity to communicate with other devices and/or systems. For example, communication interface 380 may include mechanisms for communicating with another device or system via a network, such as network 240.

The client/server entity, consistent with the principles of the invention, may perform certain operations or processes, as will be described in detail below. The client/server entity may perform these operations in response to processor 320 executing software instructions contained in a computer-readable medium, such as memory 330. A computer-readable medium may be defined as a physical or logical memory device and/or carrier wave.

The software instructions may be read into memory 330 from another computer-readable medium, such as data storage device 350, or from another device via communication interface 380. The software instructions contained in memory 330 may cause processor 320 to perform operations or processes that will be described later. Alternatively, hardwired circuitry may be used in place of or in combination with software instructions to implement processes consistent with the principles of the invention. Thus, implementations consistent with the principles of the invention are not limited to any specific combination of hardware circuitry and software.

### EXEMPLARY CONTRACTED/EXPANDED DISPLAYS OF DATA ITEMS

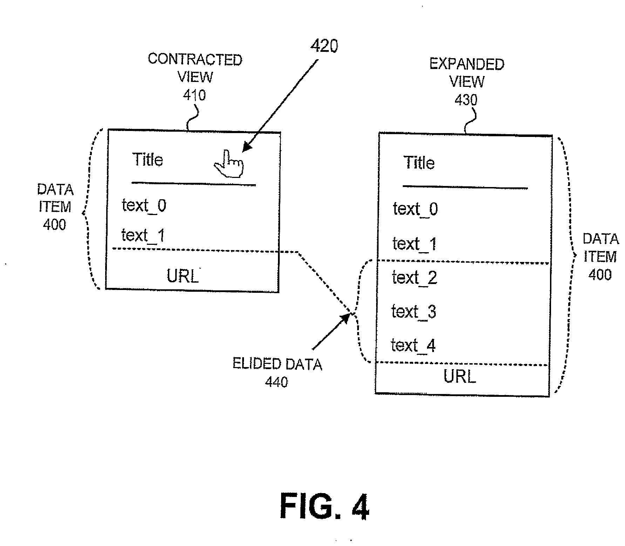

FIG. 4 is a diagram of one exemplary implementation of the invention in which a contracted view of a data item may be expanded to include elided portions of data. As shown in FIG. 4, a data item 400 may be displayed as a contracted view 410 with selected portions of the data associated with data item 400. For example, FIG. 4 depicts the contracted view 410 of data item 400 as including a title, text_0, text_1 and a URL. Upon the selection of data item 400, an expanded view 430 of data item 400 may be displayed. Selection may include, for example, the occurrence of a "mouse-over" event 420 (i.e., a user moves a cursor over data item 400 using a mouse), though other ways of selecting data item 400 may be alternatively used. As shown in FIG. 4, expanded view 430 of data item 400 may include additional elided data 440 that was visually omitted from contracted view 410. For example, FIG. 4 depicts the expanded view 430 of data item 400 as including the data text_2, text_3 and text_4 in addition to the data title, text_0, text_1 and URL data from the contracted view 410. As illustrated in FIG. 4, the expanded view 430 may insert elided data 440 in a same dimension in which the contents of data item 400 are originally presented. For example, as shown in FIG. 4, contracted view 410 includes contents of data item 400 extending vertically (e.g., text_0 and text_1 listed vertically). Expanded view 430 inserts elided data 440 (e.g., text_2, text_3 and text_4) in data item 400 such that data item 400 expands in the same vertical dimension.

Expanding the view of data item 400 may, in some implementations, involve an "animation" process in which expanded data item 400 may be expanded slowly and smoothly to reveal the elided data 440 in a manner that is not visually disruptive. In this implementation, the user may select (e.g., "click" on, or "mouse-over") data item 400, and data item 400 may change color to provide immediate feedback to the user that the selection has occurred. At this point, the data visually displayed in data item 400 may be removed and an animation object may be placed within data item 400 in place of the removed data. The animation object may then be animated to expand it with an algorithm that starts quickly and then progressively slows down until the animation object fills the space in the data item required to display the additional elided data 440. Once the animation object fills the space in the data item, the animation object may be removed (i.e., causing it to disappear) and the previously removed data in the data item, along with the elided data 440, may be visually re-inserted into the data item. Use of this animation object in expanding the view of the data item, thus, permits the presentation of the additional data in a manner that is not visually disruptive.

FIG, 4 illustrates data item 400 having a single segment of elided data 440. In other implementations, a data item (e.g., data item 400) may have multiple segments of elided data, each of which may expand or contract simultaneously (although the expansion or contraction may not necessarily be at the same rate). For example, a contracted view of a data item may display:
Google, Inc.
Mountain View, CA
while an expanded view of the data item may display:
Google, Inc.
1600 Amphitheatre Parkway
Mountain View, CA
94043
USA
One segment of elided data occurs between the two text lines of the data item, while the other segment of elided data occurs after the second line of the data item. Thus, selection of the data item results in the expansion of the data item to include multiple segments of elided data at multiple locations simultaneously.

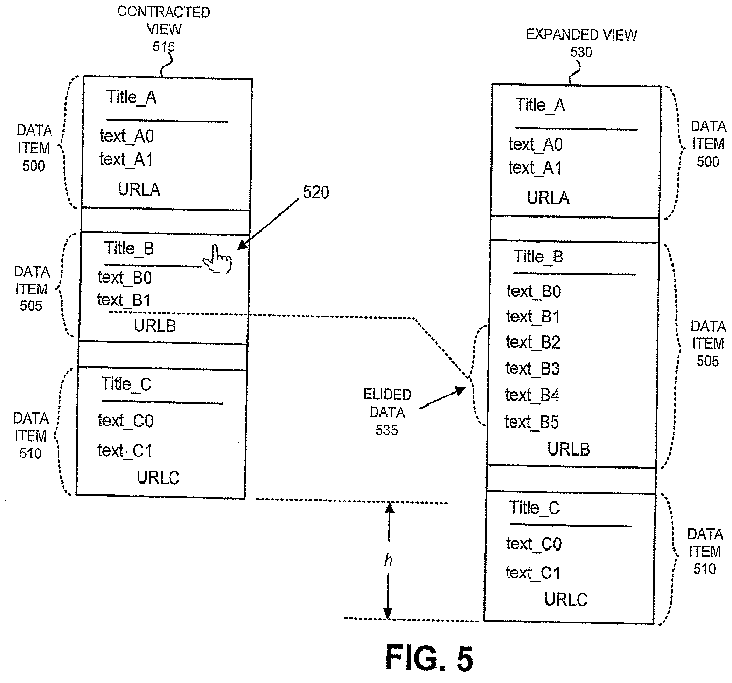

FIG. 5 is a diagram of another exemplary implementation of the invention in which a contracted view of a list of data items may be expanded to included elided portions of data. As shown in FIG. 5, multiple data items 500, 505 and 510 may be displayed in a vertical list as a contracted view 515, with selected portions of data associated with each data item 500, 505 and 510. For example, FIG. 5 depicts contracted view 515 of data item 505 as including Title_B, text_B0, text_B1 and URLB. Upon the selection of data item 505, an expanded view 530 of data items 500, 505 and 510 may be displayed. Selection may include, for example, the occurrence of a "mouse-over" event 520, though other ways of selecting data item 505 may be alternatively used. As shown in FIG. 5, expanded view 530 of data item 505 may include additional elided data 535 that was omitted from contracted view 515. For example, FIG. 5 depicts the expanded view 530 of data item 505 as including the data text_B2, text_B3, text_B4 and text_B5 in addition to the data Title_B, text_B0, text_B1 and URLB data from the contracted view 515. As shown, inclusion of elided data 535 in expanded view 530 causes the data subsequent data item 505 in the list of data items (e.g., data item 510) to be displaced by a distance *h*. In the exemplary implementation depicted in FIG. 5, data item 510 is displaced downwards by the distance *h* to include elided data 535 in expanded view 530. In other implementations, data item 500 may be displaced upwards by the distance *h*, or data items 500 and 510 may each be displaced an equal amount to permit the inclusion of elided data 535 in expanded view 530.

As illustrated in FIG. 5, expanded view 530 may insert elided data 535 in a same dimension in which the contents of data item 505 are originally presented. For example, as shown in FIG. 5, contracted view 515 includes contents of data item 505 extending vertically (e.g., text_B0 and text_B1 listed vertically). Expanded view 530 inserts elided data 535 (e.g., text_B2, text_B3, text_B4, and text_B5) in data item 505 such that data item 505 expands in the same vertical dimension.

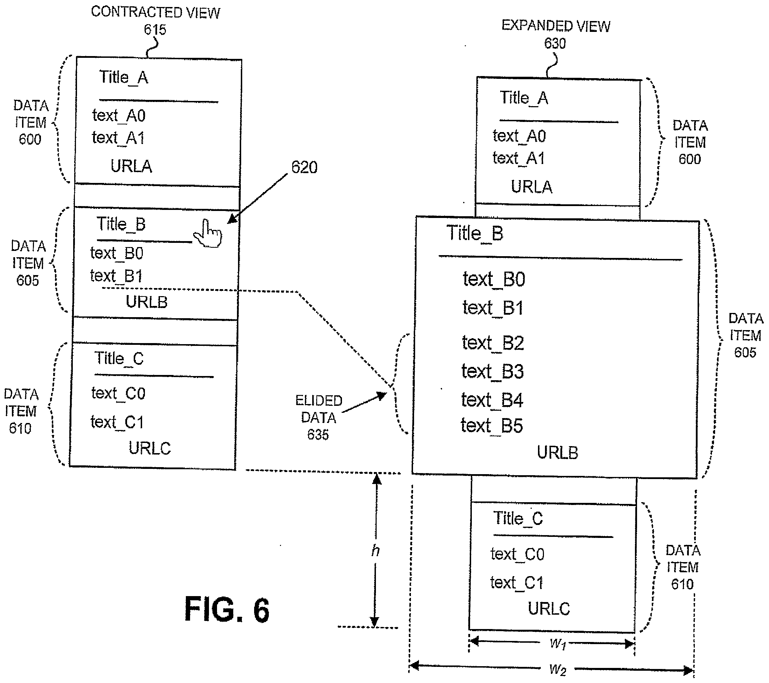

FIG. 6 is a diagram of a further exemplary implementation of the invention in which a contracted view of a list of data items may be expanded to included elided portions of data As shown in FIG. 6, multiple data items 600, 605 and 610 may be displayed in a vertical list as a contracted view 615, with selected portions of data associated with each data item 600, 605 and 610. For example, FIG. 6 depicts contracted view 615 of data item 605 as including Title_B, text_B0, text_B1 and URLB. Upon the selection of data item 605, an expanded view 630 of data items 600, 605 and 610 may be displayed. Selection may include, for example, the occurrence of a "mouse-over" event 620, though other ways of selecting data item 605 may be alternatively used. As shown in FIG. 6, expanded view 630 of data item 605 may include additional elided data 635 that was omitted from contracted view 615. For example, FIG. 6 depicts the expanded view 630 of data item 505 as including the data text_B2, text_B3, text_B4 and text_B5 in addition to the data Title_B, text_B0, text_B1 and URLB data from the contracted view 615.

As shown, inclusion of elided data 635 in expanded view 630 causes the data subsequent to data item 605 in the list of data items (e.g., data item 610) to be displaced by a distance *h.* In the exemplary implementation depicted in FIG. 6, data item 610 is displaced downwards by the distance *h* to include elided data 635 in expanded view 630. In other implementations, data item 600 may be displaced upwards by the distance *h*, or data items 600 and 610 may each be displaced an equal amount to permit the inclusion of elided data 635 in expanded view 630. As further shown in FIG. 6, data item 605 may be enlarged in two dimensions in expanded view 630. In addition to the length of data item 605 expanding by the distance *h*, the width of data item may be expanded from a width *w*₁ to a width *w*₂. Simultaneously enlarging both dimensions of data item 605 permits easier viewing of the additional elided data 635 included within expanded view 630. In some implementations, adjacent data items (e.g., data items 600 and 610) may also be enlarged slightly in both dimensions to create a "smoother" transition between the visual representation of the data items, and the data item having the additional elided data 635 displayed within it.

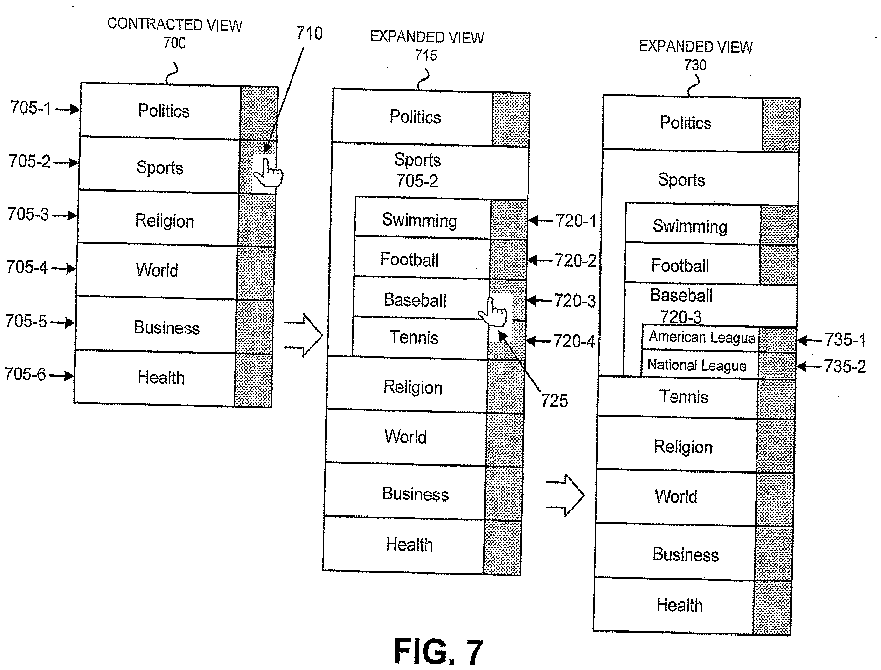

FIG. 7 is a diagram of an additional exemplary implementation of the invention in which a contracted view of a list of hierarchical data may be expanded to included elided portions of data. As shown in FIG. 7, a contracted view 700 may display data items 705-1 through 705-6 (e.g., data item "Politics," data item "Sports," data item "Religion," etc.). Each data item 705 may be a first level in a data hierarchy, with subsequent levels of data being omitted from contracted view 700. Upon the selection of a data item of contracted view 700, an expanded view 715 of the data items may be displayed. Selection may include, for example, the occurrence of a "mouse-over" event 710 over a selection area (i.e., shaded areas in FIG. 7), though other ways of selecting a data item 705 may be alternatively used. Expanded view 715 may include a next level of data in a data hierarchy for a given data item 705. For example, as depicted in FIG. 7, data item 705-2 (e.g., "Sports") may be expanded to include data items 720-1 through 720-4 (e.g., Swimming, Football, Baseball, Tennis) that were omitted from contracted view 700. Upon the selection of a data item of expanded view 715, another expanded view 730 of the data items may be displayed. Selection may include, for example, the occurrence of a "mouse-over" event 725, though other ways of selecting a data item 720 may be alternatively used. Expanded view 730 may include a further level of data in a data hierarchy for a given data item. For example, as shown in FIG. 7, data item 720-3 may be expanded to include data items 735-1 and 735-2 (e.g., American League, National League) that were omitted from expanded view 715.

FIG. 7 illustrates elided data items in the data hierarchy as being included in an expansion of a given data item when selected. In other implementations, elided data items may be appended to a given data item (e.g., appear to "pop out" of the side of a given data item in a dimension perpendicular to a dimension in which the data list primarily extends), or may entirely replace a given data item. Selection may, in addition to a "mouse-over" event, include "clicking" on a given data item.

In the exemplary implementations of FIGS. 4-7, the elided data is depicted as expanding between two subsets of the original data. In other implementations, however, the elided data may be expanded anywhere relative to the original data. For example, the elided data may be inserted and expanded above, between, below, or in two or more blocks in any of these locations. As another example, the elided data may be expanded alongside the original data so that the display expands sideways, sideways and down, or sideways and up and down (i.e., to form an area shaped like a "T" on its side). As a further example, the elided data may expand in an entirely different region of the document. As an additional example, the expanded elided data may overlap the adjacent text instead of "pushing" the adjacent text up or down.

Expansion of elided data, as described with respect to FIGS. 4-7, may happen all at once or with an animation. If it is animated, the animation may be performed in constant steps for each time step; in steps proportional to the length of each time step (to ensure that the animation completes in a given amount of time); or in steps that vary in other ways over the course of the animation (e.g., fast at first, slower at the end).

FIGS. 4-7 depict a single level of expansion to display elided data. In further implementations, multiple levels of expansion may be used. For example, the original data item may expand to display a first portion of elided data, that display being further expandable to display a second portion of elided data.

In a further implementation, a size of the expanded view may be set by the user. For example, the data item may have "active handles" at corners of the data item that the user can "drag open" to the size the user desires, with additional elided data being displayed once there is sufficient room in the expanded view. Thus, in this implementation, elided data may be added progressively rather than all of it displayed at all times.

In an additional implementation, the expanded data item (e.g., the data item visually expanded to included the elided data) may change its appearance to indicate that it has been selected by a user. For example, the change in appearance may be a new background color, a new border, or a change to the color/shape of some elements within the expanded view of the data item.

Given a document that includes multiple data items, each having elided data, a single button (or other control) may be used to expand the view of all of, or some subset of, the multiple data items at the same time. For example, if a document includes a list of search results and a list of corresponding advertisements, selection by a user may expand all of the search result items having elided data, but not the advertisements.

### EXEMPLARY DOCUMENT CONSTRUCTION PROCESS

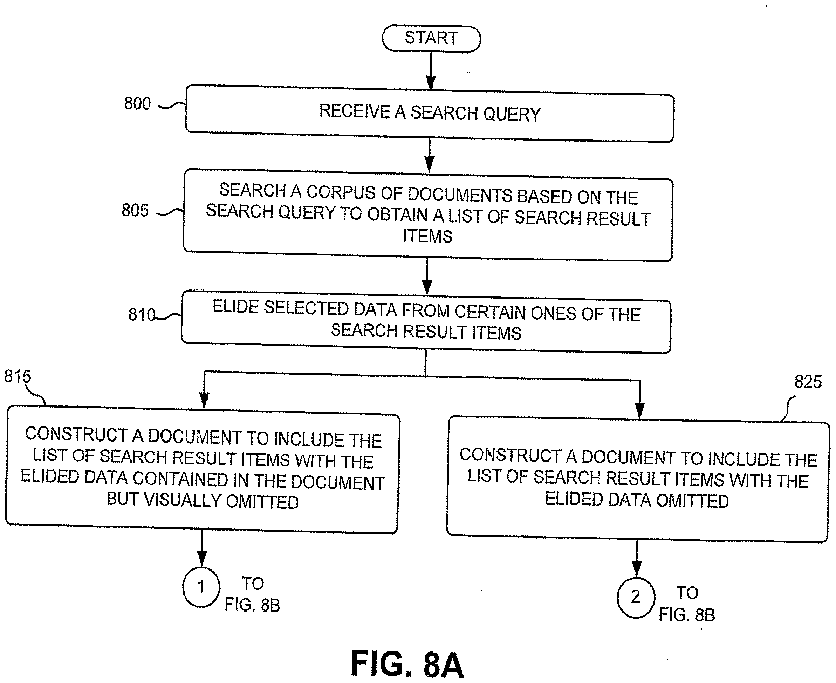

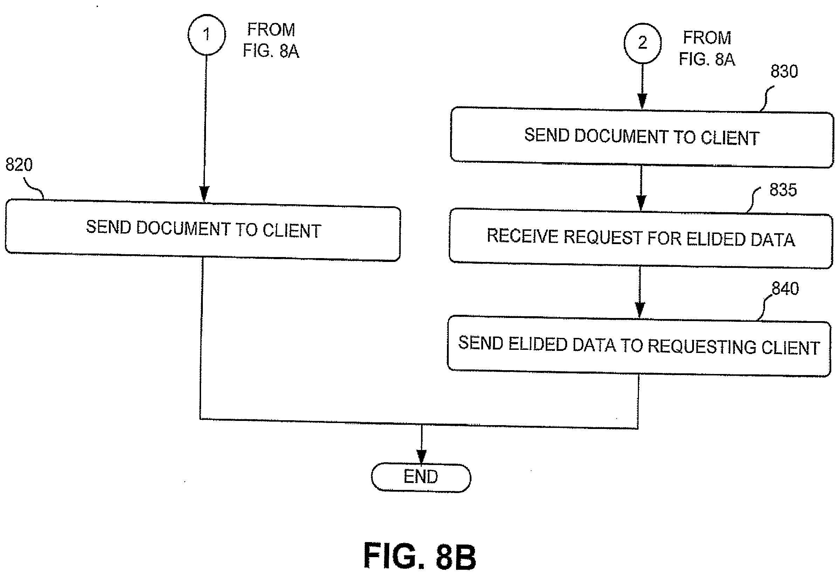

FIGS. 8A and 8B is a flowchart of an exemplary process for constructing a document that includes elided data consistent with principles of the invention. The process exemplified by FIGS. 8A and 8B may be performed by server 220, or by another entity separate from, or in conjunction with, server 220.

The exemplary process may begin with the receipt of a search query (block 800). A user at a client 210 may issue a search query to search engine 225 of server 220 via network 240. A corpus of documents may then be searched based on the search query to obtain a list of search result items (block 805). The corpus of documents searched by search engine 225 may include a repository of documents created by a crawling engine that has crawled and copied content hosted by data server(s) 230. The search result items may include data identifying and describing documents of the corpus of documents that matched, or were the most relevant to, the received search query. For example, each search result item may include a title for the corresponding document and a snippet of data contained on the corresponding document that may describe the nature or content of the document. The search result items may further include data related to advertisements that matched, or were most relevant to, the received search query.

Selected data may be elided from certain ones of the search result items (block 810). Each search result item may include a large quantity of data associated with the corresponding document. To conserve document space requirements, only selected portions of the data may be visually displayed on the search result list presented to the user. Therefore, selected data may be elided from certain ones of the search result items (e.g., no visual reference to the selected data in the search result items).

In one implementation, a document may then be constructed that includes the list of search result items, with the elided data being contained in the document, but visually omitted from the document (e.g., no visual reference to the elided data) (block 815). Thus, referring back to FIG. 1, data item 110 of document 100 may only display a small portion of data, with the elided data 130 being visually omitted from the document. The constructed document may be sent to the client 210 from which the search query originated (block 820)(FIG. 8B).

In another implementation, a document may be constructed to include the list of search result items with the elided data being omitted from the document (block 825). In this implementation, the elided data is not included in the document, but is later provided to the client in response to a request from the client 210 to server 220. The elided data may be ascertained prior to the document being constructed, or may be determined and served only after the client 210 sends a request to server 20. The elided data, thus, may not be ascertained by server 220 until after the document including the list of search result Items is transmitted to client 210, and client 210 requests the elided data (see block 835 below). The document may be sent to the client from which the search query originated (block 830)(FIG. 8B). A request for the elided data omitted from the document may be received from the client (block 835). For example, if a user at the client selects a data item associated with the elided data, the client may send a request to the server 220 requesting that the server 220 provide the elided data. The elided data may be sent to the requesting client (block 840). In response to receipt of the request, server 220 may send the elided data to the requesting client via network 240 for display to the user.

### EXEMPLARY DOCUMENT DISPLAY PROCESS

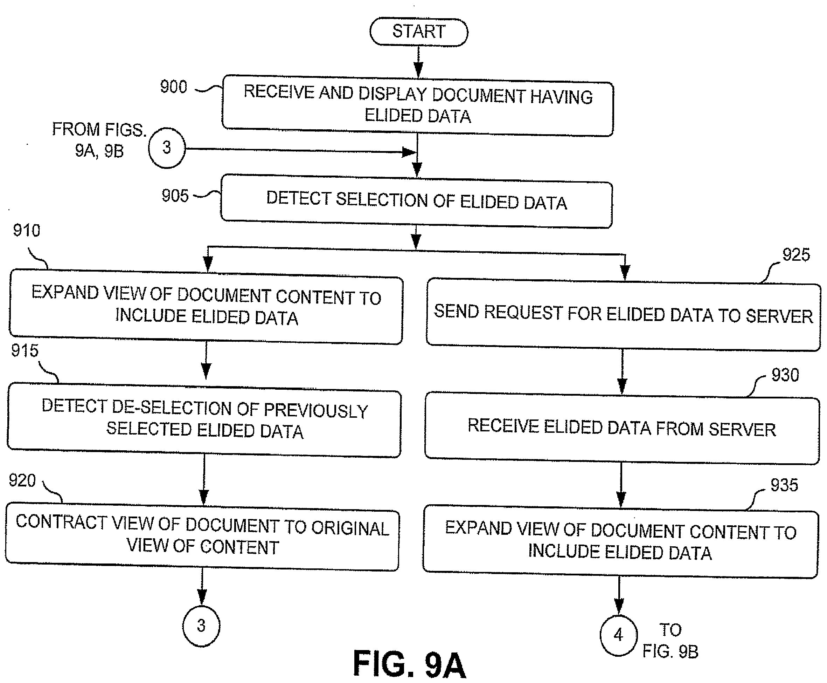

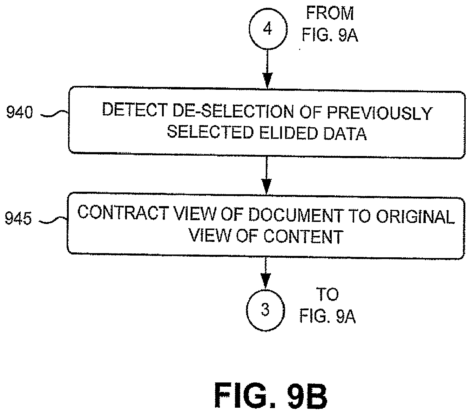

FIGS. 9A and 9B is a flowchart of an exemplary process for expanding displayed data to include elided data that was previously omitted from the display consistent with principles of the invention. The process exemplified by FIGS. 9A and 9B may be performed by a client 210.

The exemplary process may begin with the receipt and display of a document having elided data at client 210 (block 900). Client 210 may receive the document from server 220 in response, for example, to client 210 issuing a search query to server 220. The document may include, for example, a document containing a list of search result items provided by search engine 225 based on the search query received from client 210.

Selection of the elided data by a user may be detected (block 905). A user at client 210 may view the list of search result items contained in the received document and may select one of the search result items that includes the elided data. Selection may include, for example, "clicking" on a hotlink or button associated with a given data item, "clicking" anywhere within a region associated with a given data item, moving a cursor over the region associated with the data item (e.g., a "mouse-over"), hovering a cursor over the region associated with the data item, etc.

In one implementation, a view of the document content may then be expanded to include the elided data (block 910). In this implementation, the document stores the elided data within the body of the document, but does not visually display the elided data. Expanding the view of the document content, in this implementation, extracts the elided data hidden in the document, and visually displays it with its corresponding search result item. Expanding views of the document content to visually display the elided data may include, for example, those techniques already described above.

A de-selection of the previously selected elided data may be detected (block 915), and the view of the document may be contracted to the original view of the document (block 920). De-selection may include the user "clicking" on a "close" icon, the user moving the cursor off of the search result item using a mouse, etc. The exemplary process may return to act 905 above.

In another implementation, a request for the elided data may be sent to server 220 (block 925). In this implementation, the document does not store the elided data and the elided data must first be retrieved from server 220, or from an external storage repository that stores the elided data. The elided data may be received from server 220 in response to the request (block 930). In response to the request, server 220 may retrieve the requested elided data and send the data to the requesting client 210 via network 240.

A view of the document content may then be expanded to include the elided data (block 935). Expanding the view of the document content, in this implementation, includes receiving the requested elided data from server 220 and visually displaying it with its corresponding search result item. Expanding views of the document content to visually display the elided data may include, for example, those techniques described above.

A de-selection of the previously selected elided data may be detected (block 940)(FIG. 9B), and the view of the document may be contracted to the original view of the document (block 945). De-selection may include, for example, the user "clicking" on a "close" icon, the user moving the cursor off of the search result item (e.g., a "mouse-out"), a mouse-out followed by a delay, interaction by the user with another part of the document, etc. The exemplary process may return to act 905 above.

### EXAMPLE

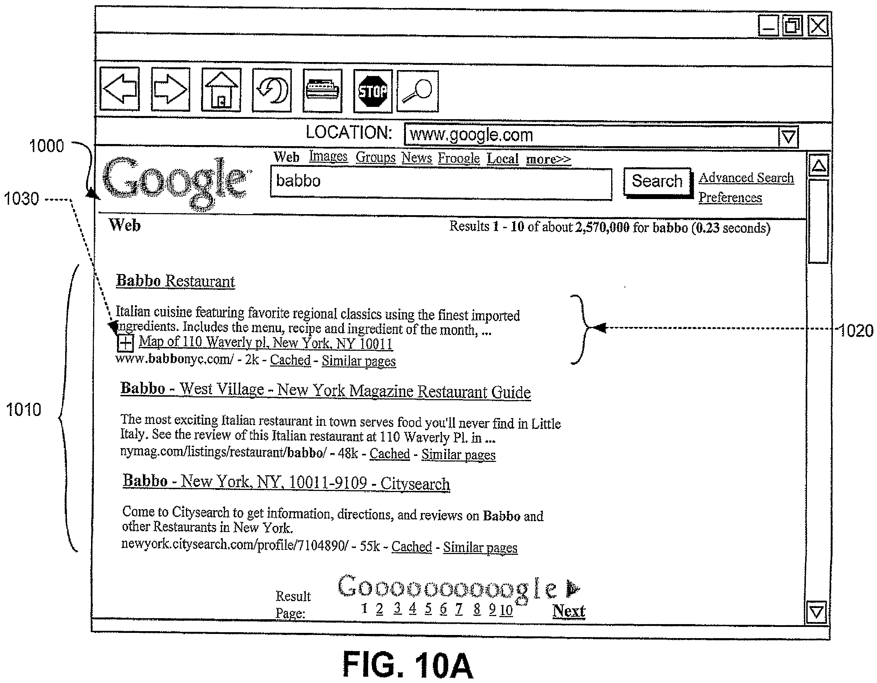

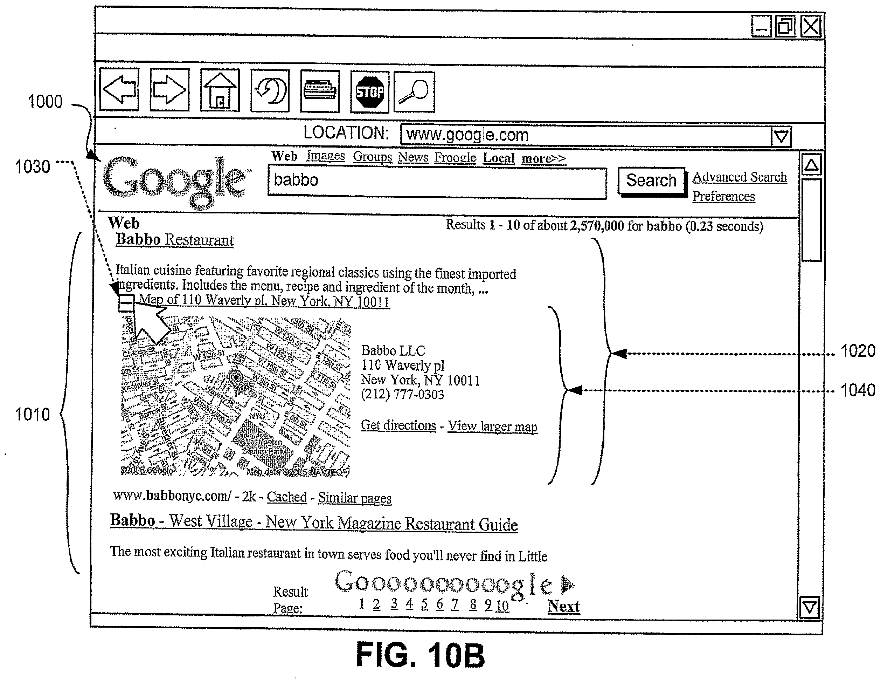

FIGS. 10A and 10B illustrate one example of the selection of a data item in a document to display previously elided data. As shown in FIG. 10A, a search result document 1000, that is returned by search engine 225 in response to a search query, may include multiple search result items 1010. A search result item 1020 of the multiple search result items 1010 may further include elided data indicated by an expansion symbol 1030. As further shown in FIG. 10B, selection of expansion symbol 1030 (e.g., by clicking or "mouse over" of expansion symbol 1030) may result in expansion of search result item 1020 to include elided data 1040 that was previously not visually displayed in search result document 1000.

### CONCLUSION .

The foregoing description of implementations consistent with principles of the invention provides illustration and description, but is not intended to be exhaustive or to limit the invention to the precise form disclosed. Modifications and variations are possible in light of the above teachings, or may be acquired from practice of the invention. For example, while a series of acts has been described with regard to FIGS. 8A, 8B, 9A and 9B, the order of the acts may be modified in other implementations consistent with the principles of the invention. Further, non-dependent acts may be performed in parallel. As another example, while aspects of the invention have been described as being applicable to search result lists, expansion and contraction of elided data may be equally applied to advertisements presented in lists, e-mails presented in list format, etc.

Expansion and contraction of elided data can have many applications beyond those explicitly described above. For example, yellow page phone book entries within a particular category can be elided to just display a list of names, where each expanded item also displays additional information such as an ad or a small map. Elided data may assist in navigating to a particular category. Similarly, white page phone book entries may be elided to display only surnames until selected, revealing all entries with the same surname.

As another example, television and radio program listings can present summary information such as a time, program name, and channel with the expanded data items displaying additional information such as performers, duration, and a given program's re-run status. As a further example, listings of sports results can present summary scores containing team names and the final scores, with elided material including per-inning statistics or highlights from the games.

As an additional example, newspaper articles can be categorized and revealed using elided data. The data item, in a contracted view, would display the headlines and a short snippet, while the expanded item that includes the elided data would display the first portions of the news article. "Clicking" on the data item would expand the display to the full article.

As a further example, contraction and expansion of elided data may be applied to infinite lists. Typically, search results are broken into separate pages, however, when elided data is used search results can be displayed as an infinites list. As a user scrolls down the list, underlying data requests can occur to ensure that enough information is available to display the elided data in the list. Thus, an infinite list of search results (or any other type of data list) can be returned with a selected data item expanded to display elided data upon demand.

Implementations of the invention may further keep track of the expanded or contracted nature of the data items of any document displayed to a user (e.g., which data items have been expanded to display elided data) so that, when the user "clicks" away to another site and then returns to the same document via the "back" button, history, or a bookmark, the user will find the document in the same state as when the user left.

It will be apparent to one of ordinary skill in the art that aspects of the invention, as described above, may be implemented in many different forms of software, firmware, and hardware in the implementations illustrated in the figures. The actual software code or specialized control hardware used to implement aspects consistent with the principles of the invention is not limiting of the invention. Thus, the operation and behavior of the aspects have been described without reference to the specific software code, it being understood that one of ordinary skill in the art would be able to design software and control hardware to implement the aspects based on the description herein.

No element, act, or instruction used in the present application should be construed as critical or essential to the invention unless explicitly described as such. Also, as used herein, the article "a" is intended to include one or more items. Where only one item is intended, the term "one" or similar language is used. Further, the phrase "based on" is intended to mean "based, at least in part, on" unless explicitly stated otherwise.

## Claims

1. A method comprising:
sending a search query to a search engine;
receiving, from the search engine, responsive to the search query, a document comprising a first data item and a second data item;
visually rendering a snippet of text from the first data item (110) in a region of a display and visually rendering text from the second data item outside the region;
receiving a selection of the first data item from a user;
visually expanding the snippet of text from the first data item of the document based on the selection; and
visually rendering additional text from the first data item (130) within the expanded region of the document, where the additional text differs from the snippet of text.

2. The method of claim 1, wherein the first data item (110) is selected by clicking on the region or by moving the cursor over the region.

3. The method of claim 1, wherein visually expanding the region comprises:
displacing at least a portion of the second item a sufficient distance to visually render the snippet of text and the additional text within the region.

4. The method of claim 1, wherein expanding the region comprises:
expanding the region in two dimensions in the document to include the snippet of text and the additional text.

5. The method of claim 1, wherein the first data item (110) comprises a snippet of text of a first document that matches the search query.

6. The method of claim 5, wherein the second data item comprises a snippet of text of a second document that matches the search query.

7. The method of claim 1, where the snippet of text comprises a first portion of a document corresponding to the first data item and the additional text comprises a second portion of the document comprising the first data item.

8. The method of claim 1, where visually expanding the region comprises:
removing the snippet of text and placing an animation object within the region;
animating the animation object such that the animation object expands to fill a space to sufficiently visually render the snippet of text and the additional text; and
removing the animation object.

9. The method of claim 1, where the region comprises active handles at one or more corners of the region and where visually expanding the region comprises:
Receiving input from a user moving one of the active handles such that the region is expanded to a size to sufficiently visually render at least a portion of the snippet of text and the additional text.

10. The method of claim 8, where the region of the document that comprises the snippet of text primarily extends in a first dimension and where animating the object comprises expanding the region in a dimension perpendicular to the first dimension.

11. The method of claim 1, further comprising:
receiving a second selection of the first data item (110) from the user;
further expanding the expanded region to a size sufficient to visually render a further additional portion of the first data item (110); and
visually rendering the further additional portion of the first data item (110) within the further expanded region.

12. The method of claim 1, where visually expanding the region comprises displacing the text from the second data item by a distance determined by the expanded region.

13. The method of claim 1, where visually expanding the region comprises visually overlapping the text from the second data item.

14. The method of claim 1, where the first data item (110) and the second data item are items in a list of hierarchical data.

15. A device comprising:
means for sending a search query to a search engine;
means for receiving, from the search engine, responsive to the search query, a document comprising a first data item and a second data item;
means for visually rendering a snippet of text from the first data item (110) in a region of a display and visually rendering text from the second data item outside the region;
means for receiving a selection of the first data item from a user;
means for visually expanding the snippet of text from the first data item of the document in two dimensions within the document to include additional text from the first data item (130), based on the selection; and
means for visually rendering the additional text from the first data item (130) within the expanded region of the document.

## Patentansprüche

1. Verfahren, umfassend:
Senden einer Suchanfrage an eine Suchmaschine;
Empfangen eines Dokuments, das ein erstes Datenelement und ein zweites Datenelement umfasst, von der Suchmaschine als Reaktion auf die Suchanfrage;
bildliches Darstellen eines Textausschnitts aus dem ersten Datenelement (110) in einem Bereich einer Anzeige und bildliches Darstellen von Text aus dem zweiten Datenelement außerhalb des Bereichs;
Empfangen einer Auswahl des ersten Datenelements von einem Benutzer;
auf der Auswahl beruhendes bildliches Erweitern des Textausschnitts aus dem ersten Datenelement des Dokuments; und
bildliches Darstellen von zusätzlichem Text aus dem ersten Datenelement (130) innerhalb des erweiterten Bereichs des Dokuments, wobei der zusätzliche Text sich vom Textausschnitt unterscheidet.

2. Verfahren nach Anspruch 1, worin das erste Datenelement (110) durch Anklicken des Bereichs oder durch Bewegen des Cursors über den Bereich ausgewählt wird.

3. Verfahren nach Anspruch 1, worin das bildliche Erweitern des Bereichs umfasst:
Verschieben zumindest eines Abschnitts des zweiten Elements um eine ausreichende Strecke, um den Textausschnitt und den zusätzlichen Text innerhalb des Bereichs bildlich darzustellen.

4. Verfahren nach Anspruch 1, worin das Erweitern des Bereichs umfasst: Erweitern des Bereichs in zwei Dimensionen im Dokument, um den Textausschnitt und den zusätzlichen Text einzuschließen.

5. Verfahren nach Anspruch 1, worin das erste Datenelement (110) einen Textausschnitt eines ersten Dokuments umfasst, das zu der Suchanfrage passt.

6. Verfahren nach Anspruch 5, worin das zweite Datenelement einen Textausschnitt eines zweiten Dokuments umfasst, das zu der Suchanfrage passt.

7. Verfahren nach Anspruch 1, wobei der Textausschnitt einen ersten Abschnitt eines Dokuments umfasst, das dem ersten Datenelement entspricht, und der zusätzliche Text einen zweiten Abschnitt des Dokuments umfasst, das das erste Datenelement umfasst.

8. Verfahren nach Anspruch 1, wobei das bildliche Erweitern des Bereichs umfasst:
Entfernen des Textausschnitts und Platzieren eines Animationsobjekts innerhalb des Bereichs;
Animieren des Animationsobjekts, so dass das Animationsobjekt sich ausdehnt, um einen Raum zu füllen, um den Textausschnitt und den zusätzlichen Text ausreichend bildlich darzustellen; und
Entfernen des Animationsobjekts.

9. Verfahren nach Anspruch 1, wobei der Bereich aktive Griffe an einer oder mehreren Ecken des Bereichs umfasst und wobei das bildliche Erweitern des Bereichs umfasst: Empfangen von Eingaben von einem Benutzer, der einen der aktiven Griffe bewegt, so dass der Bereich auf eine Größe erweitert wird, um zumindest einen Abschnitt des Textausschnitts und des zusätzlichen Textes ausreichend bildlich darzustellen.

10. Verfahren nach Anspruch 8, wobei der Bereich des Dokuments, der den Textausschnitt umfasst, sich hauptsächlich in einer ersten Dimension erstreckt und wobei das Animieren des Objekts umfasst: Erweitern des Bereichs in einer Dimension senkrecht zur ersten Dimension.

11. Verfahren nach Anspruch 1, ferner umfassend:
Empfangen einer zweiten Auswahl des ersten Datenelements (110) vom Benutzer;
weiteres Erweitern des erweiterten Bereichs auf eine Größe, die ausreicht, um einen weiteren zusätzlichen Abschnitt des ersten Datenelements (110) bildlich darzustellen; und
bildliches Darstellen des weiteren zusätzlichen Abschnitts des ersten Datenelements (110) innerhalb des weiter erweiterten Bereichs.

12. Verfahren nach Anspruch 1, wobei das bildliche Erweitern des Bereichs umfasst: Verschieben des Textes aus dem zweiten Datenelement um eine durch den erweiterten Bereich bestimmte Strecke.

13. Verfahren nach Anspruch 1, wobei das bildliche Erweitern des Bereichs umfasst: bildliches Überlappen des Textes aus dem zweiten Datenelement.

14. Verfahren nach Anspruch 1, wobei das erste Datenelement (110) und das zweite Datenelement Elemente in einer Liste von hierarchischen Daten sind.

15. Vorrichtung, umfassend:
ein Mittel zum Senden einer Suchanfrage an eine Suchmaschine;
ein Mittel zum Empfangen eines Dokuments, das ein erstes Datenelement und ein zweites Datenelement umfasst, von der Suchmaschine als Reaktion auf die Suchanfrage;
ein Mittel zum bildlichen Darstellen eines Textausschnitts aus dem ersten Datenelement (110) in einem Bereich einer Anzeige und zum bildlichen Darstellen von Text aus dem zweiten Datenelement außerhalb des Bereichs;
ein Mittel zum Empfangen einer Auswahl des ersten Datenelements von einem Benutzer;
ein Mittel zum auf der Auswahl beruhenden bildlichen Erweitern des Textausschnitts aus dem ersten Datenelement des Dokuments in zwei Dimensionen innerhalb des Dokuments, um zusätzlichen Text aus dem ersten Datenelement (130) einzuschließen; und
ein Mittel zum bildlichen Darstellen des zusätzlichen Textes aus dem ersten Datenelement (130) innerhalb des erweiterten Bereichs des Dokuments.

## Revendications

1. Procédé comprenant :
l'envoi d'une requête de recherche sur un moteur de recherche ;
la réception, en provenance du moteur de recherche, en réponse à la requête de recherche, d'un document qui comprend un premier élément de données et un second élément de données ;
le rendu visuel d'un fragment de code de texte en provenance du premier élément de données (110) dans une région d'un affichage et le rendu visuel d'un texte en provenance du second élément de données à l'extérieur de la région ;
la réception d'une sélection du premier élément de données en provenance d'un utilisateur ;
l'extension visuelle du fragment de code de texte en provenance du premier élément de données du document sur la base de la sélection ; et
le rendu visuel d'un texte additionnel en provenance du premier élément de données (130) à l'intérieur de la région étendue du document, dans lequel le texte additionnel diffère du fragment de code de texte.

2. Procédé selon la revendication 1, dans lequel le premier élément de données (110) est sélectionné en cliquant sur la région ou en déplaçant le curseur au-dessus de la région.

3. Procédé selon la revendication 1, dans lequel l'extension visuelle de la région comprend :
le déplacement d'au moins une partie du second élément de données sur une distance suffisante pour effectuer un rendu visuel du fragment de code de texte et du texte additionnel à l'intérieur de la région.

4. Procédé selon la revendication 1, dans lequel l'extension visuelle de la région comprend :
l'extension de la région selon deux dimensions dans le document de manière à inclure le fragment de code de texte et le texte additionnel.

5. Procédé selon la revendication 1, dans lequel le premier élément de données (110) comprend un fragment de code de texte d'un premier document qui concorde avec la requête de recherche.

6. Procédé selon la revendication 5, dans lequel le second élément de données comprend un fragment de code de texte d'un second document qui concorde avec la requête de recherche.

7. Procédé selon la revendication 1, dans lequel le fragment de code de texte comprend une première partie d'un document qui correspond au premier élément de données et le texte additionnel comprend une seconde partie du document qui comprend le premier élément de données.

8. Procédé selon la revendication 1, dans lequel l'extension visuelle de la région comprend :
la suppression du fragment de code de texte et le positionnement d'un objet d'animation à l'intérieur de la région ;
l'animation de l'objet d'animation de telle sorte que l'objet d'animation soit étendu de manière à ce qu'il remplisse un espace afin d'effectuer un rendu visuel de manière suffisante du fragment de code de texte et du texte additionnel ; et
la suppression de l'objet d'animation.

9. Procédé selon la revendication 1, dans lequel la région comprend des moyens de préhension actifs au niveau d'un ou de plusieurs angle(s) de la région et dans lequel l'extension visuelle de la région comprend : la réception d'une entrée en provenance d'un utilisateur qui déplace l'un des moyens de préhension actifs de telle sorte que la région soit étendue jusqu'à une taille qui permet d'effectuer un rendu visuel de manière suffisante d'au moins une partie du fragment de code de texte et du texte additionnel.

10. Procédé selon la revendication 8, dans lequel la région du document qui comprend le fragment de code de texte s'étend essentiellement dans une première dimension et dans lequel l'animation de l'objet d'animation comprend l'extension de la région dans une dimension qui est perpendiculaire à la première dimension.

11. Procédé selon la revendication 1, comprenant en outre :
la réception d'une seconde sélection du premier élément de données (110) en provenance de l'utilisateur ;
l'extension encore de la région étendue jusqu'à une taille qui est suffisante pour effectuer un rendu visuel d'une autre partie additionnelle du premier élément de données (110); et
le rendu visuel de l'autre partie additionnelle du premier élément de données (110) à l'intérieur de la région encore étendue.

12. Procédé selon la revendication 1, dans lequel l'extension visuelle de la région comprend le déplacement du texte en provenance du second élément de données sur une distance qui est déterminée par la région étendue.

13. Procédé selon la revendication 1, dans lequel l'extension visuelle de la région comprend la mise en chevauchement visuel du texte en provenance du second élément de données.

14. Procédé selon la revendication 1, dans lequel le premier élément de données (110) et le second élément de données sont des éléments pris dans une liste de données hiérarchiques.

15. Dispositif comprenant :
un moyen pour envoyer une requête de recherche sur un moteur de recherche ;
un moyen pour recevoir, en provenance du moteur de recherche, en réponse à la requête de recherche, un document qui comprend un premier élément de données et un second élément de données ;
un moyen pour effectuer un rendu visuel d'un fragment de code de texte en provenance du premier élément de données (110) dans une région d'un affichage et pour effectuer un rendu visuel d'un texte en provenance du second élément de données à l'extérieur de la région ;
un moyen pour recevoir une sélection du premier élément de données en provenance d'un utilisateur ;
un moyen pour étendre visuellement le fragment de code de texte en provenance du premier élément de données du document selon deux dimensions à l'intérieur du document de manière à inclure un texte additionnel en provenance du premier élément de données (130), sur la base de la sélection ; et
un moyen pour effectuer un rendu visuel du texte additionnel en provenance du premier élément de données (130) à l'intérieur de la région étendue du document.
